# EUROPÄISCHE PATENTSCHRIFT

(11) **EP 2 994 725 B1**
(45) Veröffentlichungstag und Bekanntmachung des Hinweises auf die Patenterteilung: **15.01.2020**
(21) Anmeldenummer: 14719288.4
(22) Anmeldetag: 22.04.2014
(51) Int. Cl.: G01F 23/24, G01F 23/26

(54) **VERFAHREN UND VORRICHTUNG ZUR ÜBERWACHUNG ZUMINDEST EINER MEDIENSPEZIFISCHEN EIGENSCHAFT EINES MEDIUMS FÜR EINE FÜLLSTANDSMESSUNG**
METHOD AND APPARATUS FOR MONITORING OF AT LEAST ONE SPECIFIC PROPERTY OF A FLUID MEDIUM FOR A LEVEL MEASUREMENT
PROCÉDÉ ET DISPOSITIF DE MONITORAGE D'AU MOINS UNE PROPRIÉTÉ D'UN FLUIDE POUR MESURER LE NIVEAU DU FLUIDE

(30) Priorität: 08.05.2013 DE 102013104781
(43) Veröffentlichungstag der Anmeldung: 16.03.2016
(73) Patentinhaber: Endress+Hauser SE+Co. KG, 79689 Maulburg (DE)
(72) Erfinder: WERNET, Armin, 79618 Rheinfelden (DE); BECHTEL, Gerd, 79585 Steinen (DE); UPPENKAMP, Kaj, 79664 Wehr (DE); FERRARO, Franco, 79739 Schwörstadt (DE)
(74) Vertreter: Andres, Angelika Maria
(86) Internationale Anmeldenummer: PCT/EP2014/058047
(87) Internationale Veröffentlichungsnummer: WO 2014/180649

(56) Entgegenhaltungen:
- WO-A1-02/093150
- DE-A1- 10 343 751
- DE-A1-102004 047 413
- DE-A1-102010 038 535
- US-A1- 2006 103 393

## Beschreibung

Die Erfindung betrifft ein Verfahren und eine Vorrichtung zur Überwachung zumindest einer medienspezifischen Eigenschaft eines Mediums in der Automatisierungstechnik mit einer Messsonde.

Aus der DE 32 12 434 C2 ist es bekannt geworden, den Füllstand eines Mediums zu überwachen, indem erkannt wird, ob über das leitfähige Medium ein elektrischer Kontakt zwischen einer Sensorelektrode und der Wandung eines leitfähigen Behälters oder einer zweiten Elektrode besteht. Da es an der Messsonde in Abhängigkeit vom zu überwachenden Medium oftmals zu Ansatzbildung kommt, kommt eine Guardelektrode zum Einsatz. Diese umgibt die Sensorelektrode koaxial und liegt auf dem gleichen elektrischen Potential wie die Sensorelektrode. Je nach Beschaffenheit des Ansatzes zeigt sich bei dieser Ausgestaltung das Problem, das Guardsignal passend zu erzeugen.

In der DE 10 2006 047 780 A1 wird eine Füllstandsmesssonde beschrieben, die über einen großen Messbereich hinweg unempfindlich ist gegenüber Ansatzbildung. Gemäß der bekannten Lösung sind eine Verstärkungseinheit und ein Begrenzungselement vorgesehen, wobei das Begrenzungselement zwischen dem Ausgang der Verstärkungseinheit und der Guardelektrode angeordnet ist. Die Guardelektrode wird über die Verstärkungseinheit und das Begrenzungselement, bei dem es sich z.B. um einen Ohm'schen Widerstand handelt, mit einem Guardsignal beaufschlagt. Analog wird die Sensorelektrode mit dem Ansteuersignal beaufschlagt. Eine Auswerteeinheit überwacht ausgehend von dem an der Sensorelektrode abgreifbaren Stromsignal und dem Ansteuersignal und/oder dem Guardsignal den Füllstand. Die Verstärkungseinheit, welche das Guardsignal erzeugt, wird durch das Begrenzungselement beschränkt. Das in seiner Amplitude beschränkte Signal wird als Anregungssignal auf die Sensorelektrode gegeben. Von der Sensorelektrode wird anschließend ein Stromsignal abgegriffen, welches in Verbindung mit dem Ansteuersignal oder dem Guardsignal zwecks Überwachung des Füllstands herangezogen wird.

Aus der DE 10 2008 043 412 A1 ist ein Füllstandschalter mit einer Speichereinheit bekannt geworden, wobei in der Speichereinheit Grenzwerte für unterschiedliche in einem Behälter befindliche Medien abgelegt sind. Bei Über- oder Unterschreiten des auf das Medium abgestimmten Grenzwertes wird ein Schaltsignal erzeugt. Insbesondere lässt sich der Grenzwert für den Messwert in Bezug auf das in dem Behälter befindliche Medium so festlegen, dass eine Ansatzbildung das zuverlässige Schalten nicht beeinflusst. Da Ansatzbildung das Messsignal verfälscht und somit eine falsche Prozessgröße vorspiegelt, ist der Grenzwert (der den Schaltpunkt bestimmt) vorzugsweise so gelegt, dass er außerhalb des Bereichs für das Messsignal liegt, welcher durch den Ansatz erreichbar ist. Die Vorrichtung kann hierbei als kapazitives oder als konduktives Füllstandsmessgerät ausgebildet sein. Da sich die Vorrichtung automatisch auf wechselnde Medien (z.B. auch im Rahmen von Reinigungsvorgängen wie CIP- und SIP Prozessen) im Behälter einstellen kann, indem der optimale Schaltpunkt aus den erfassten Mediumseigenschaften ermittelt bzw. berechnet wird, können aufwändige Abgleichsvorgänge, die üblicherweise bei einem Wechsel des Mediums notwendig sind, entfallen.

Die Füllstanddetektion mittels eines konduktiven Messverfahrens stößt an ihre Grenzen, wenn das zu überwachende Medium quasi keine elektrische Leitfähigkeit (< 1µS/cm) oder nur eine sehr geringe Leitfähigkeit aufweist. Eine Änderung der Leitfähigkeit des Mediums im Verhältnis zur Leitfähigkeit von Luft ist dann zu gering, um noch sicher von der Messelektronik erfasst werden zu können. Bei diesen mit einem konduktiven Messverfahren schwer zu überwachenden Medien handelt es sich z.B. um destilliertes Wasser, Melasse oder Alkohole. Noch problematischer sind Medien mit einer elektrischen Leitfähigkeit kleiner 1µS/cm und einer Dielektrizitätskonstanten kleiner 20. In diesen Bereich fallen insbesondere Öle und Fette.

Aus der WO02/093150A1 und aus der DE10343751A1 sind Sensoren bekannt bekannt geworden, mit welchem in zwei unterschiedlichen Betriebsarten jeweils die Leitfähigkeit oder die Permittivität eines Mediums bestimmbar sind. Aus der DE102004047413A1 ist eine Möglichkeit zur kapazitiven Füllstandsmessung bekannt gewroden, die im Wesentlichen unabhängig von der elektrischen Leitfähigkeit des Mediums ist.

In der DE 102013102055A1 wird ein Verfahren zur Überwachung eines vorgegebenen Füllstands eines Mediums in einem Behälter beschrieben. Das Verfahren umfasst die folgenden Verfahrensschritte:
eine Füllstandsmesssonde wird in einem konduktiven Betriebsmodus als konduktive Füllstandsmesssonde und in einem kapazitiven Betriebsmodus als kapazitive Füllstandsmesssonde betrieben;
der konduktive Betriebsmodus und der kapazitive Betriebsmodus werden abwechselnd angesteuert;
anhand der Messwerte der beiden Betriebsmodi wird ermittelt, ob der vorgegebene Füllstand des Mediums in dem Behälter erreicht ist;
eine Meldung wird generiert, wenn der vorgegebene Füllstand überschritten und/oder unterschritten wird.

Die DE102010038535A1 beschreibt ein Füllstandsmessgerät, bei dem eine als Hohlkörper ausgestaltete Elektrode als schwingfähige Membran ausgebildet ist. Auf diese Art und Weise kann der Füllstand redundant und unabhängig mit dem kapazitiven und vibronischen oder mit dem konduktiven und dem vibronischen Messprinzip bestimmt werden.

Der Erfindung liegt die Aufgabe zugrunde, ein Verfahren und eine Vorrichtung bereitzustellen, die die Überwachung der elektrischen Leitfähigkeit und/oder der und damit die Überwachung und/oder Steuerung eines in der Automatisierungstechnik ablaufenden Prozesses erlauben.

Die Aufgabe wird bezüglich des Verfahrens durch die folgenden Verfahrensschritte des unabhängigen Anspruchs 1 gelöst.

Erfindungsgemäß lassen sich somit die Vorteile des konduktiven Messverfahrens und die Vorteile des kapazitiven Messverfahrens vereinen. Hierdurch ist es möglich, eine Information über die medienspezifische Eigenschaft zuverlässig über einen erweiterten Mediumsbereich bereitzustellen. Der Applikationsbereich des Messgeräts wird dadurch erheblich vergrößert. Hierbei ist zu erwähnen, dass die Vorteile und Nachteile des konduktiven Messverfahrens und des kapazitiven Messverfahrens in kritischen Bereichen gegenläufig sind und sich somit großteils kompensieren. Insbesondere ist es mittels des erfindungsgemäßen Verfahrens möglich, die medienspezifische Eigenschaft bzw. den Prozess sicher zu überwachen, wenn die Dielektrizitätskonstanten größer ist als 1.5.

Ein konduktives Messverfahren kommt bevorzugt zur Überwachung von Medien zum Einsatz, wenn die zu überwachenden Medien eine elektrische Leitfähigkeit > 5µS/cm aufweisen. Der Vorteil der konduktiven Messverfahren ist darin zu sehen, dass die Sensorelektroden eine direkte Anbindung an das Medium aufweisen können. Eine Isolierung der Sensorelektroden ist nicht erforderlich.

Ein Nachteil der kapazitiven Messverfahren ist darin zu sehen, dass bei Medien mit zunehmender elektrischer Leitfähigkeit eine Isolation zwischen der Sensorelektrode und dem Medium erforderlich ist. Die Impedanz der Isolierung erweist sich als nachteilig, sobald Ansatzbildung auftritt. Durch das erfindungsgemäße Verfahren ist es möglich, den Bereich, in dem eine zuverlässige Überwachung einer medienspezifischen Eigenschaft bzw. des Prozesses möglich ist, erheblich zu erweitern.

Erfindungsgemäß wird die elektrische Leitfähigkeit und/oder die Dielektrizitätskonstante ermittelt. Handelt es sich bei dem zu überwachenden Medium um ein nicht leitfähiges Medium oder um ein Medium mit einer geringen Leitfähigkeit werden erfindungsgemäß die Messwerte genommen, die im kapazitiven Betriebsmodus ermittelt werden. Handelt es sich hingegen bei dem zu überwachenden Medium um ein Medium mit einer gut messbaren, höheren elektrischen Leitfähigkeit, so werden die Messwerte genommen, die im konduktiven Betriebsmodus gewonnen werden. Handelt es sich bei dem zu überwachenden Medium um ein Medium mit einer Leitfähigkeit in einem Übergangsbereich, werden die Messwerte genommen, die im kapazitiven Betriebsmodus und im konduktiven Betriebsmodus ermittelt werden. Gemäß einer vorteilhaften Ausgestaltung werden anschließend die im kapazitiven Betriebsmodus ermittelten Messwerte mit den Messwerten verglichen, die im konduktiven Betriebsmodus gewonnen werden. Anhand des Vergleichs wird ein Plausibilitätscheck durchgeführt.

Über eine externe Schnittstelle, z.B. eine Profibusschnittstelle, eine magnetische Schnittstelle, wie sie in der DE 102011 087 230A1 der Anmelderin, angemeldet am 28.11.2011, beschrieben ist oder eine weltweit standardisierte IO-Technologie, wie in IEC 61131-9 beschrieben, besteht die Möglichkeit, das im Behälter befindliche Medium bezüglich zumindest einer seiner medienspezifischen Eigenschaften zu überwachen und dem Anwender die entsprechende Information zur Verfügung zu stellen. Zusätzlich wird eine Grenzstandüberwachung des Mediums in dem Behälter vorgenommen. Hierbei ist zu beachten, dass eine Überwachung zumindest einer der medienspezifischen Eigenschaften nur möglich ist, wenn die Messsonde in Kontakt mit dem Medium ist, also mit dem Medium bedeckt ist. Zusätzlich würde in diesem Zustand dann auch das Erreichen des vorbestimmten Füllstands signalisiert werden. Erfindungsgemäß ist ferner vorgesehen, dass unter Verwendung der ermittelten medienspezifischen Eigenschaft(en) zumindest eine prozessspezifische Eigenschaft überwacht wird. Bei der prozessspezifischen Eigenschaft des Mediums handelt es sich um den bereits zuvor erwähnten vorgegebenen Füllstand, bei dessen Erreichen z.B. ein Schaltvorgang durchgeführt wird. Beispielsweise wird durch den Schaltvorgang eine Pumpe aus- oder eingeschaltet.

Im Detail ist hierzu vorgesehen, dass der Messsonde zusätzlich zur Überwachung der medienspezifischen Eigenschaft zumindest eine Schaltfunktion zugeordnet ist, mit der ein vorgegebener Füllstand des Mediums in dem Behälter überwacht wird. In diesem Zusammenhang wird weiterhin vorgeschlagen, dass der Messsonde mindestens eine Schaltkurve zugeordnet ist, die die Messwerte der Messsonde oder aus den Messwerten der Messsonde abgeleitete Größen in eine funktonalen Beziehung zu zumindest einer der überwachten medienspezifischen Eigenschaften des Mediums setzt, und wobei bei Erreichen eines durch die Schaltkurve vorgegebenen Messwertes der Messsonde das Unterschreiten und/oder Überschreiten eines vorgegebenen Füllstands des Mediums in dem Behälter signalisiert wird.

Als besonders vorteilhaft wird es in diesem Zusammenhang angesehen, wenn die Schaltkurve bzw. der Schaltpunkt für den Grenzstandschalter durch das Bedienpersonal an die speziellen in dem Behälter vorhandenen Prozessbedingungen angepasst werden kann. Beispielsweise ist die Möglichkeit vorgesehen, die Ansatzempfindlichkeit des Grenzstandschalters individuell auf die vorhandenen Prozessbedingungen bzw. auf die vorhandene Applikation einzustellen. Es wird eine selbstgenerierte Schaltkurve mit auf die jeweilige Applikation optimal angepassten anwendungsspezifischen Schaltpunkten erzeugt. Diese wird nachfolgend in der Messsonde zur Ermittlung des vorgegebenen Füllstands verwendet, wodurch die Messgenauigkeit erhöht werden kann. Die Anpassung der Schaltkurve erfolgt bevorzugt über eine der externen Schnittstellen, die an vorhergehender Stelle bereits genannt wurden.

Die Aufgabe wird bezüglich der Vorrichtung dadurch gelöst, dass eine Messsonde vorgesehen ist, die so ausgestaltet ist, dass sie in einem konduktiven Betriebsmodus als konduktive Messsonde und in einem kapazitiven Betriebsmodus als kapazitive Messsonde betreibbar ist. Weiterhin ist eine Steuer-/ Auswerte-/Ausgabeeinheit vorgesehen, die so ausgestaltet ist, dass sie den konduktiven Betriebsmodus und den kapazitiven Betriebsmodus abwechselnd ansteuert. Darüber hinaus überprüft die Steuer-/Auswerte-/Ausgabeeinheit anhand der Messwerte, die in zumindest einem der beiden Betriebsmodi ermittelt werden, ob die zu überwachende medienspezifische Eigenschaft innerhalb eines vorgegebenen Toleranzbandes liegt, und sie generiert eine Meldung, wenn die zu überwachende medienspezifische Eigenschaft außerhalb des vorgegebenen Toleranzbandes liegt. Die Steuer-/ Auswerte-/Ausgabeeinheit ist ferner dazu ausgestaltet,
unter Verwendung der ermittelten elektrischen Leitfähigkeit, und/oder der Dielektrizitätskonstante zumindest einen vorgegebenen Füllstand des in dem Behälter befindlichen Mediums zu überwachen.
bei zu überwachenden nicht leitfähigen Medien oder Medien mit einer geringen Leitfähigkeit die Messwerte zu nehmen, die im kapazitiven Betriebsmodus ermittelt werden,
bei zu überwachenden Medien mit einer hohen elektrischen Leitfähigkeit die Messwerte zu nehmen, die im konduktiven Betriebsmodus gewonnen werden, und
bei zu überwachenden Medien mit einer Leitfähigkeit in einem Übergangsbereich die Messwerte zu nehmen, die im kapazitiven Betriebsmodus und im konduktiven Betriebsmodus ermittelt werden,
und die Messwerte des konduktiven und kapazitiven Betriebsmodus mit einem Gewichtungsfaktor zu versehen.

Weiterhin ist vorgesehen, dass der Messsonde eine Speichereinheit zugeordnet ist, in der Information abgelegt ist, die die Messwerte der Messsonde oder aus den Messwerten der Messsonde abgeleitete Größen in eine funktionale Beziehung zu zumindest einer der medienspezifischen Eigenschaften des Mediums setzt. Über die funktionale Beziehung sind die Schaltpunkte für die Steuer-/Auswerte-/Ausgabeeinheit vorgegeben.

Bevorzugt weist die Messsonde eine Sensorelektrode und eine Guardelektrode auf. Weiterhin sind eine erste Elektronikeinheit, die so ausgelegt ist, dass sie die Messsonde im konduktiven Betriebsmodus betreibt, und eine zweite Elektronikeinheit vorgesehen, die so ausgelegt ist, dass sie die Messsonde im kapazitiven Betriebsmodus betreibt. Darüber hinaus ist eine Schalteinheit vorgesehen, über die die Steuer-/ Auswerte-/Ausgabeeinheit abwechselnd den konduktiven Betriebsmodus und den kapazitiven Betriebsmodus der Messsonde aktiviert. Je nach angesteuertem Betriebsmodus beaufschlagt die erste Elektronikeinheit oder die zweite Elektronikeinheit die Sensorelektrode mit einem Ansteuersignal und die Guardelektrode mit einem Guardsignal. Die Steuer-/Auswerte-/Ausgabeeinheit ermittelt ausgehend von einem an der Sensorelektrode resultierenden abgreifbaren Signal und dem Ansteuersignal und/oder dem Guardsignal das Überschreiten und/oder das Unterschreiten des vorgegebenen Füllstands.

Eine vorteilhafte Ausgestaltung der erfindungsgemäßen Vorrichtung sieht vor, dass die Steuer-/Auswerte-/Ausgabeeinheit mindestens ein Amplitudenverhältnis aus dem Guardsignal und/oder dem Ansteuersignal und dem Stromsignal und/oder einem von dem Stromsignal abhängigen Spannungssignal ermittelt und anhand des Amplitudenverhältnisses das Überschreiten oder Unterschreiten des Füllstands des Mediums in dem Behälter ermittelt.

Die Erfindung wird anhand der nachfolgenden Figuren näher erläutert. Es zeigt:
Fig. 1 zeigt eine schematische Darstellung einer Ausgestaltung der erfindungsgemäßen Vorrichtung,
Fig. 2a: in Teilansicht einen Längsschnitt durch eine erfindungsgemäße Messsonde,
Fig. 2b: einen Querschnitt durch die in Fig. 2a gezeigte Messsonde,
Fig. 3: ein Diagramm, das die relative Dielektrizitätskonstante unterschiedlicher Medien aus dem Lebensmittelbereich in Abhängigkeit von der elektrischen Leitfähigkeit zeigt,
Fig. 4: eine schematische Darstellung von Schaltkurven einer Füllstandsmesssonde,
Fig. 5: eine schematische Darstellung der unterschiedlichen Betriebsmodi,
Fig. 6: eine schematische Darstellung, die die unterschiedlichen Möglichkeiten der Überwachung von zwei unterschiedlichen medienspezifischen Eigenschaften zeigt.

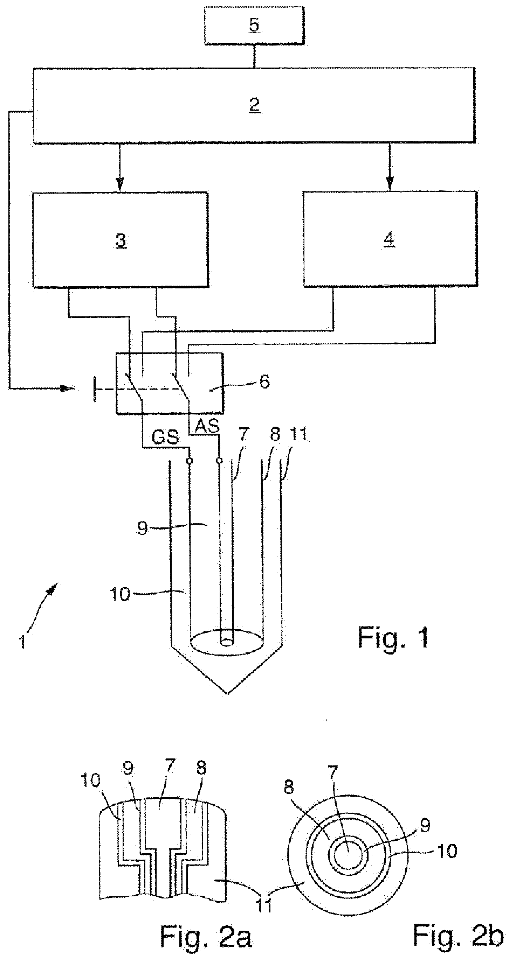

Fig. 1 zeigt eine schematische Darstellung einer bevorzugten Ausgestaltung der erfindungsgemäßen Vorrichtung zur Überwachung einer medienspezifischen Eigenschaft eines Mediums in einem Behälter. Die erfindungsgemäße Vorrichtung umfasst eine Messsonde 1, die so ausgestaltet ist, dass sie in einem konduktiven Betriebsmodus als konduktive Messsonde 1 und in einem kapazitiven Betriebsmodus I als kapazitive Messsonde 1 betrieben werden kann. Über die Steuereinheit 2, die im gezeigten Fall als integrale Komponente einer Steuer-/Auswerte-/Ausgabeeinheit 2 ausgestaltet ist, wird die Messsonde 1 abwechselnd in den konduktiven Betriebsmodus II und in den kapazitiven Betriebsmodus I gesteuert. Es versteht sich von selbst, dass die einzelnen Komponenten der Steuer-/Auswerte-/Anzeigeeinheit 2 auch als separate Teilkomponenten ausgestaltet sein können.

Die Messsonde 1 weist sowohl zur Anwendung des konduktiven Betriebsmodus als auch zur Anwendung des kapazitiven Betriebsmodus dieselbe Sensorelektrode 7, Guardelektrode 8 und Masseelektrode 11 auf. Bevorzugt ist die Messsonde 1 frontbündig oder zumindest näherungsweise frontbündig so an oder in dem Behälter angeordnet, dass sie zumindest zeitweise mit dem Medium in Kontakt ist. Bevorzugt aber ist sie in ständigem Kontakt mit dem Medium, um so eine kontinuierliche Überwachung der medienspezifischen Eigenschaft sicherzustellen. Der Behälter ist in Fig.1 mit dem Bezugszeichen 11 versehen.

Von der Anmelderin werden unter der Bezeichnung FTW33 Füllstandmesssonden 1 für die Grenzstanddetektion angeboten und vertrieben, die konstruktiv einen ähnlichen Aufbau zeigen, wie diejenige, die bei der erfindungsgemäßen Lösung zum Einsatz kommen kann. Allerdings weisen diese bekannten Füllstandmesssonden keinen umschaltbaren konduktiven und kapazitiven Betriebsmodus auf. In der nicht vorveröffentlichten Patentanmeldung der Anmelderin DE 10 2013 102 055.0 wird eine Messsonde beschrieben, die das Umschalten zwischen den beiden Betriebsmodi zeigtallerdings wird hier nicht eine medienspezifische Eigenschaft des Mediums überwacht, sondern die Messsonde wird für die Grenzstanddetektion verwendet. Im Rahmen der vorliegenden Erfindung ist es - wie bereits zuvor erwähnt - möglich, die Grenzstanddetektion zusätzlich als Funktion zur Überwachung der medienspezifischen Eigenschaft(en) zu nutzen. Allerdings ist dies nur in gewissen Anwendungen möglich, beispielsweise bei schnellen Batch Prozessen, bei denen die Messsonde in vorgegebenen Abständen immer wieder mit dem Medium in Kontakt kommt.

Handelt es sich um einen Behälter, der aus einem leitfähigen Material - wie in Fig. 1 dargestellt - so kann die Masseelektrode 11 von der Wandung des Behälters gebildet werden. Selbstverständlich kann die Masseelektrode 11 bei Behältern mit einer Wandung aus einem nicht leitfähigen Material auch als integrale Komponente der Füllstandsmesssonde 1 ausgebildet sein. Entsprechende Ausgestaltungen sind in Fig. 1 (Wandung als Masseelektrode 11) und in Fig. 2a, Fig. 2b (Masseelektrode 11 als integrale Komponente des Füllstandsmesssonde 1) dargestellt. Ebenso ist es möglich, als Masse-elektrode eine separate Elektrode vorzusehen.

Über eine erste Elektronikeinheit 3 wird die Messsonde 1 im konduktiven Betriebsmodus betrieben, über eine zweite Elektronikeinheit 4 ist der kapazitive Betriebsmodus I der Messsonde 1 aktivierbar.

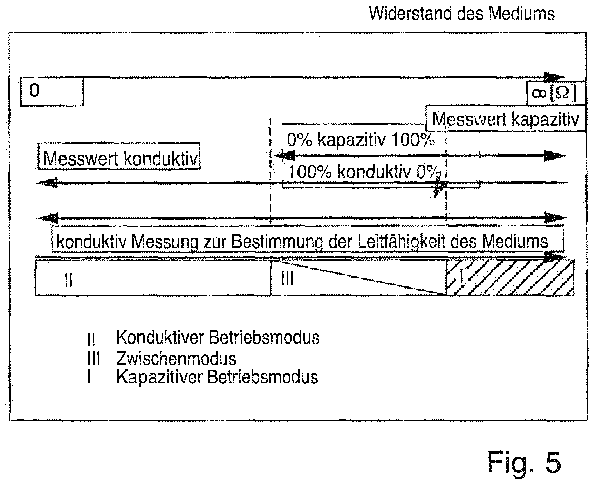

Die bevorzugte abwechselnde Ansteuerung des konduktiven Betriebsmodus (Bereich II in Fig. 5) und des kapazitiven Betriebsmodus (Bereich I in Fig. 5), die zur Bestimmung der Dielektrizitätskonstanten des Mediums verwendet wird, erfolgt über eine Schalteinheit 6. Die Schalteinheit 6 ist entweder als analoge Schalteinheit oder als digitale Schalteinheit ausgelegt. Die Ansteuerung der Messsonde 1 erfolgt über das Ansteuersignal AS für die Sensorelektrode 7 und das Guardsignal GS für die Guardelektrode 8.

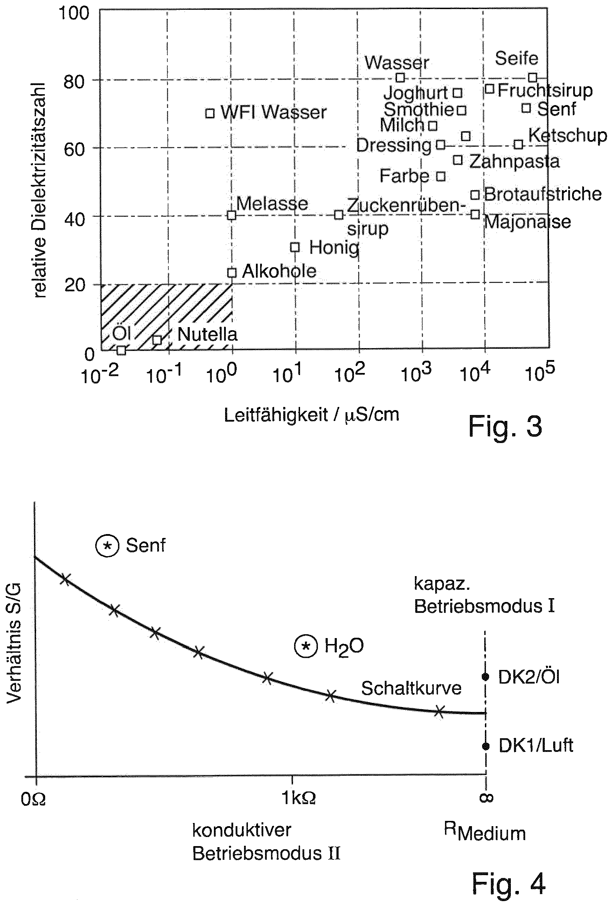

Ein Ausführungsbeispiel einer Elektronikeinheit 3 für eine konduktive Füllstandsmesssonde 1 ist beispielsweise in der bereits zuvor genannten Füllstandsmesssonde FTW33 der Anmelderin realisiert, die insbesondere für den Einsatz im Lebensmittelbereich vorgesehen ist. Geeignete Elektronikeinheiten 3 sind darüber hinaus aus der DE 10 2006 047 780 A1 und DE 10 2008 043 412 A1 bekannt geworden. Die Funktionsweise der Messsonde 1 im konduktiven Betriebsmodus ist in den Figuren Fig. 2 und Fig. 3 der DE 10 2006 047 780 A1 beschrieben. Die Beschreibung ist explizit zum Offenbarungsgehalt der vorliegenden Erfindung hinzuzurechnen.

Als Elektronikeinheit 4 für den kapazitiven Betriebsmodus kann beispielsweise eine leicht modifizierte Elektronik zum Einsatz kommen, wie sie in einer der kapazitiven Füllstandsmesssonden verwendet wird, die von der Anmelderin unter der Bezeichnung LIQUICAP, Nivector oder Minicap angeboten und vertrieben werden.

Anhand der Messwerte, die im kapazitiven Betriebsmodus und im konduktiven Betriebsmodus bestimmt werden, ermittelt die Steuer-/Auswerte-/Ausgabeeinheit 2 die medienspezifische Eigenschaft des Mediums. Anschließend wird geprüft, ob die zumindest eine zu überwachende medien-spezifische Eigenschaft, insbesondere die Dielektrizitätskonstante oder die elektrische Leitfähigkeit innerhalb eines vorgegebenen Toleranzbandes liegt, das für den in dem Behälter ablaufenden Prozess spezifiziert worden ist. Sobald die zu überwachende medienspezifische Eigenschaft außerhalb des vorgegebenen Toleranzbandes liegt, wird eine entsprechende Meldung und/oder ein entsprechendes Schaltsignal generiert, so dass Gegenmaßnahmen zur Behebung der Abweichung in die Wege geleitet werden können.

Der Schaltpunkt ist insbesondere abhängig von der Leitfähigkeit bzw. der relativen Dielektrizitätskonstanten des Mediums. Zumindest eine Schaltkurve ist in der Speichereinheit 5 abgelegt. Ist z.B. die Leitfähigkeit des Mediums bekannt, so kann der zugehörige optimale Schaltpunkt anhand der abgespeicherten Schaltkurve ermittelt werden. Eine schematische Darstellung einer Schaltkurve ist in Fig. 4 zu sehen. Ein weiteres Beispiel für eine in Verbindung mit der erfindungsgemäßen Lösung anwendbare Schaltkurve ist in der bereits zitierten DE 10 2006 047 780 A1 bezeigt. Eine Ausgestaltung der erfindungsgemäßen Lösung sieht vor, dass der Anwender den Schaltpunkt bzw. die Schaltkurve in gewissen Grenzen variieren kann. Hierdurch ist es möglich, dass der Anwender den Schaltpunkt bzw. die Schaltkurve optimal an den im Behälter ablaufenden bzw. stattfindenden Prozess anpassen kann.

Erfindungsgemäß werden bezüglich der Grenzstanddetektion drei Bereiche I, II, III unterschieden:
- Bei nicht leitfähigen Medien oder Medien mit einer geringen Leitfähigkeit werden die Messwerte genommen werden, die im kapazitiven Betriebsmodus (Bereich I) ermittelt werden. Bevorzugt liegt der Bereich I im Widerstandsbereich von 300kΩ bis Unendlich.
- Bei zu überwachenden Medien mit einer hohen elektrischen Leitfähigkeit werden die Messwerte genommen, die im konduktiven Betriebsmodus (Bereich II) gewonnen werden. Bevorzugt liegt der Bereich II in einem Widerstandsbereich von 0Ω bis 1MΩ.
- Bei zu überwachenden Medien mit einer Leitfähigkeit in einem Zwischenbereich (III) werden die Messwerte genommen werden, die im kapazitiven Betriebsmodus und im konduktiven Betriebsmodus ermittelt werden. In Abhängigkeit von der Leitfähigkeit werden die Messwerte mit geeigneten Gewichtungsfaktoren versehen. Diese Gewichtungsfaktoren liegen im gezeigten Fall sowohl für den kapazitiven Betriebsmodus I als auch für den konduktiven Betriebsmodus II zwischen 0% und 100% liegen, allerdings sind sie gegenläufig. Bevorzugt liegt der Bereich III in einem Widerstandsbereich von 300 kΩ bis 1MΩ.

Anhand der im kapazitiven Betriebsmodus und im konduktiven Betriebsmodus ermittelten Messwerte ist es gemäß einer bevorzugten Ausgestaltung des erfindungsgemäßen Verfahrens möglich, einen Plausibilitätscheck durchzuführen.

Im Zusammenhang mit der Erfindung wird so vorgegangen, dass unabhängig vom Medium zuerst im konduktiven Betriebsmodus die Guardspannung gemessen wird. Die Guardspannung beschreibt die Leitfähigkeit oder der Widerstand des Mediums. In Fig. 3 ist die relative Dielektrizitätskonstante von unterschiedlichen Lebensmitteln gegen die Leitfähigkeit aufgetragen. Ist der Widerstand des Mediums bekannt, so ist anhand von Fig. 5 auch bekannt, in welchem der drei Bereiche I, II, III die nachfolgenden Messungen angesiedelt sind:
- im Bereich I, in dem ausschließlich über den kapazitiven Betriebsmodus die Messwerte ermittelt werden,
- im Bereich II, in dem ausschließlich über den konduktiven Betriebsmodus die Messwerte bereitgestellt werden, oder
- im Zwischenbereich III, in dem die Messwerte für die Füllstandsüberwachung durch eine geeignete Gewichtung der im kapazitiven Betriebsmodus I und im konduktiven Betriebsmodus II ermittelten Messwerte gebildet werden.

Bei Messungen im konduktiven Betriebsmodus ist der Messwert immer abhängig von dem Verhältnis von Sensorspannung (an der Sensorelektrode 9 gemessene Spannung) zu Guardspannung (an der Guardelektrode 10 gemessene Spannung). In diesem Zusammenhang wird wiederum auf die Offenbarung der DE 10 2006 047 780 A1 verwiesen.

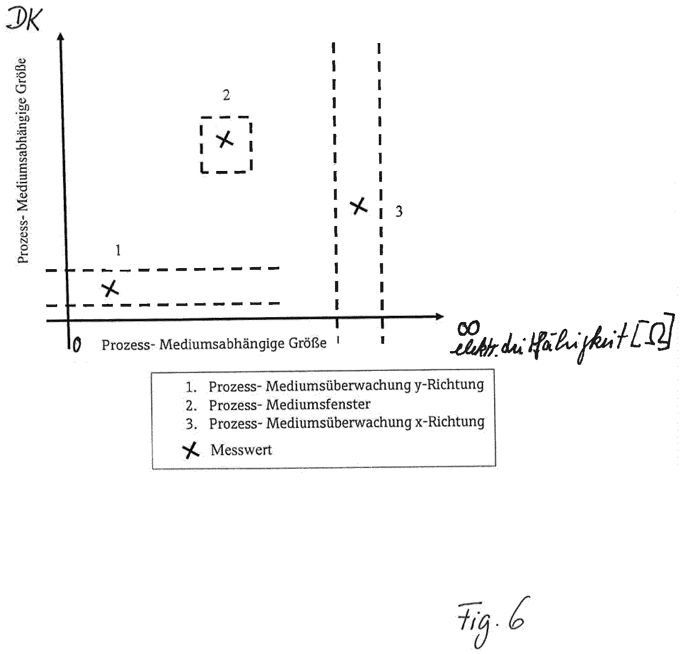

Bei nicht leitfähigen Medien kommt ausschließlich eine Messung im kapazitiven Betriebsmodus zur Anwendung. Dieser Messwert ist abhängig von der Dielektrizitätskonstanten des Mediums. Dazwischen liegt ein Übergangsbereich III, in welchem die den Betriebsmodi konduktiv/kapazitiv gewonnenen Messwerte miteinander verrechnet und/oder gewichtet werden. Damit die Gewichtung stetig und ohne Sprung erfolgt, werden die im kapazitiven Betriebsmodus und im konduktiven Betriebsmodus ermittelten Messwerte anteilig von 100 bis 0% bzw. von 0% bis 100% gewichtet. Weitere Information hierzu findet sich in der bereits erwähnten DE 10 2013 102 055.0. Die Beschreibung der Figuren Fig. 6 und Fig. 7 ist dem Offenbarungsgehalt der vorliegenden Patentanmeldung explizit hinzuzurechnen.

Fig. 6 zeigt beispielhaft verschiedene Varianten, wie die Messsonde medienspezifische Eigenschaften bei einem in einem Behälter ablaufenden Prozess überwacht. Bei dem Prozess handelt es sich beispielsweise um einen Fermentationsprozess.

Auf der x-Achse ist im gezeigten Fall die elektrische Leitfähigkeit des Mediums aufgetragen. Bei nicht leitfähigen Medien ist eine Überwachung der elektrischen Leitfähigkeit nicht möglich. Hier macht es Sinn, die Dielektrizitätskonstante zu überwachen. Diese ist im gezeigten Fall auf der y-Achse aufgetragen. Die Kennzeichnung A charakterisiert beispielhafte eine Variante, bei der die medienspezifischen Eigenschaft elektrische Leitfähigkeit eines leitfähigen Mediums in dem Behälter (y-Richtung) überwacht wird. Das Toleranzband ist mit zwei gestrichelten parallelen Linien gekennzeichnet. Solange die Messwerte X innerhalb des Toleranzbandes liegen, läuft der zu überwachende Prozess in dem Behälter korrekt ab. Verlassen die Messwerte das Toleranzband, so wird ein entsprechendes Alarmsignal oder ein Schaltsignal erzeugt. Automatisch oder manuell muss dann korrigierend in den Prozess eingegriffen werden.

Die Kennzeichnung C zeigt eine Variante, bei der eine medienspezifische Eigenschaft eines nicht leitfähigen Mediums (x-Richtung) überwacht wird. Bei der zu überwachenden Medieneigenschaft handelt es sich um die Dielektrizitätskonstante. Das Toleranzband ist wiederum mit zwei gestrichelten parallelen Linien gekennzeichnet. Solange die Messwerte X innerhalb des Toleranzbandes liegen, läuft der zu überwachende Prozess in dem Behälter korrekt ab. Verlassen die Messwerte das Toleranzband, so wird ein entsprechendes Alarmsignal oder ein Schaltsignal erzeugt. Automatisch oder manuell muss dann korrigierend in den Prozess eingegriffen werden.

Die Kennzeichnung B zeigt eine Variante, bei der zwei medienspezifische Eigenschaften - die Dielektrizitätskonstante und die elektrische Leitfähigkeit - gleichzeitig überwacht werden. Die Überwachung erfolgt sowohl in x-Richtung als auch in y-Richtung. Das Toleranzband reduziert sich in diesem Fall auf ein Toleranzfenster, das durch vier senkrecht aufeinander stehende Linien gekennzeichnet ist. Solange die Messwerte X innerhalb des Toleranzfensters liegen, läuft der zu überwachende Prozess in dem Behälter korrekt ab. Verlassen die Messwerte das Toleranzfenster, so wird ein entsprechendes Alarmsignal oder ein Schaltsignal erzeugt. Automatisch oder manuell muss dann korrigierend in den Prozess eingegriffen werden.

### Bezugszeichenliste

- 1: Messsonde
- 2: Steuerung, Steuer-/ Auswerte-/Ausgabeeinheit
- 3: erste Elektronikeinheit
- 4: zweite Elektronikeinheit
- 5: Speichereinheit
- 6: Schalteinheit
- 7: Sensorelektrode
- 8: Guardelektrode
- 9: Isolierung
- 10: Isolierung
- 11: Masseelektrode bzw. Metallbehälter

## Patentansprüche

1. Verfahren zur Überwachung von Messwerten der elektrischen Leitfähigkeit, und/oder der Dielektrizitätskonstante eines Mediums in einem Behälter in der Automatisierungstechnik mit einer Messsonde (1), welche Messsonde (1) in einem konduktiven Betriebsmodus als konduktive Messsonde und in einem kapazitiven Betriebsmodus als kapazitive Messsonde betrieben wird, wobei der konduktive Betriebsmodus und der kapazitive Betriebsmodus abwechselnd angesteuert werden, und wobei unter Verwendung der ermittelten elektrischen Leitfähigkeit und/oder der Dielektrizitätskonstante ein vorgegebener Füllstand des in dem Behälter befindlichen Mediums überwacht wird,
**dadurch gekennzeichnet, dass** anhand der Messwerte, die in zumindest einem der beiden Betriebsmodi ermittelt werden, überprüft wird, ob die elektrische Leitfähigkeit und/oder die Dielektrizitätskonstante innerhalb eines vorgegebenen Toleranzbandes liegt, wobei eine Meldung und/oder ein Schaltsignal generiert wird, wenn die elektrische Leitfähigkeit und/oder die Dielektrizitätskonstante außerhalb des vorgegebenen Toleranzbandes liegt,
wobei bei zu überwachenden nicht leitfähigen Medien oder Medien mit einer geringen Leitfähigkeit die Messwerte genommen werden, die im kapazitiven Betriebsmodus ermittelt werden,
wobei bei zu überwachenden Medien mit einer hohen elektrischen Leitfähigkeit die Messwerte genommen werden, die im konduktiven Betriebsmodus gewonnen werden, und wobei bei zu überwachenden Medien mit einer Leitfähigkeit in einem Übergangsbereich die Messwerte genommen werden, die im kapazitiven Betriebsmodus und im konduktiven Betriebsmodus ermittelt werden,
wobei die Messwerte des konduktiven und kapazitiven Betriebsmodus mit einem Gewichtungsfaktor versehen werden.

2. Verfahren nach Anspruch 1,
wobei im Übergangsbereich die Messwerte, die im kapazitiven Betriebsmodus ermittelt werden, mit den Messwerten verglichen werden, die im konduktiven Betriebsmodus ermittelt werden, und wobei anhand des Vergleichs ein Plausibilitätscheck durchgeführt wird.

3. Verfahren nach einem oder mehreren der vorhergehenden Ansprüche,
wobei der Messsonde (1) eine Schaltfunktion zur Überwachung eines vorgegebenen Füllstands des Mediums in dem Behälter zugeordnet wird, wobei bei Erreichen des vorgebbaren Füllstands ein Schaltvorgang einer Pumpe durchgeführt wird.

4. Verfahren nach Anspruch 3,
wobei der Messsonde (1) mindestens eine Schaltkurve zugeordnet wird, die die Messwerte der Messsonde oder aus den Messwerten der Messsonde (1) abgeleitete Größen in eine funktionalen Beziehung zu zumindest einer der medienspezifischen Eigenschaften des Mediums setzt, und wobei bei Erreichen eines durch die Schaltkurve vorgegebenen Messwertes der Messsonde (1) das Unterschreiten und/oder Überschreiten eines vorgegebenen Füllstands des Mediums in dem Behälter signalisiert wird.

5. Verfahren nach Anspruch 4,
wobei die Schaltkurve durch das Bedienpersonal so angepasst wird, dass eine Ansatzempfindlichkeit der Messsonde (1) auf die vorhandene Applikation eingestellt wird.

6. Vorrichtung ausgeführt zur Überwachung der elektrischen Leitfähigkeit, und/oder der Dielektrizitätskonstante eines Mediums in einem Behälter mit einer Messsonde (1), die so ausgestaltet ist, dass sie in einem konduktiven Betriebsmodus als konduktive Messsonde und in einem kapazitiven Betriebsmodus als kapazitive Messsonde betrieben wird, mit einer Steuer-/ Auswerte-/Ausgabeeinheit (2), die so ausgestaltet ist, dass sie den konduktiven Betriebsmodus und den kapazitiven Betriebsmodus abwechselnd ansteuert, und unter Verwendung der ermittelten elektrischen Leitfähigkeit und/oder der Dielektrizitätskonstante einen vorgegebenen Füllstand des in dem Behälter befindlichen Mediums überwacht,
**dadurch gekennzeichnet, dass** die Steuer-/Auswerte-/Ausgabeeinheit (2) ferner so ausgestaltet ist, dass sie anhand der Messwerte, die in zumindest einem der beiden Betriebsmodi ermittelt werden, überprüft, ob die elektrische Leitfähigkeit und/oder die Dielektrizitätskonstante innerhalb eines vorgegebenen Toleranzbandes liegt, die eine Meldung generiert, wenn die die elektrische Leitfähigkeit und/oder die Dielektrizitätskonstante außerhalb des vorgegebenen Toleranzbandes liegt, wobei die Steuer-/Auswerte-/Ausgabeeinheit (2) ferner dazu ausgestaltet ist, bei zu überwachenden nicht leitfähigen Medien oder Medien mit einer geringen Leitfähigkeit die Messwerte zu nehmen, die im kapazitiven Betriebsmodus ermittelt werden,
bei zu überwachenden Medien mit einer hohen elektrischen Leitfähigkeit die Messwerte zu nehmen, die im konduktiven Betriebsmodus gewonnen werden,
und bei zu überwachenden Medien mit einer Leitfähigkeit in einem Übergangsbereich die Messwerte zu nehmen, die im kapazitiven Betriebsmodus und im konduktiven Betriebsmodus ermittelt werden,
wobei die Messwerte des konduktiven und kapazitiven Betriebsmodus mit einem Gewichtungsfaktor versehen werden.

7. Vorrichtung nach Anspruch 6,
wobei der Messsonde (1) eine Speichereinheit (5) zugeordnet ist, in der Information abgelegt ist, die die Messwerte der Messsonde (1) oder aus den Messwerten der Messsonde (1) abgeleitete Größen in eine funktionale Beziehung zu zumindest einer medienspezifischen Eigenschaft des Mediums setzt, wobei über die funktionale Beziehung die Schaltpunkte für die Steuer-/Auswerte-/Ausgabeeinheit (2) vorgegeben sind.

8. Vorrichtung nach Anspruch 6 oder 7,
wobei die Messsonde (1) eine Sensorelektrode (7) und eine Guardelektrode (8) aufweist,
wobei eine erste Elektronikeinheit (3) vorgesehen ist, die so ausgelegt ist, das sie die Messsonde im konduktiven Betriebsmodus betreibt,
wobei eine zweite Elektronikeinheit (4) vorgesehen ist, die so ausgelegt ist, dass sie die Messsonde (1) im kapazitiven Betriebsmodus betreibt, und
wobei eine Schalteinheit (6) vorgesehen ist, über die die Steuer-/ Auswerte-/Ausgabeeinheit (2) abwechselnd den konduktiven Betriebsmodus und den kapazitiven Betriebsmodus der Messsonde (1) aktiviert.

9. Vorrichtung nach Anspruch 8,
wobei je nach angesteuertem Betriebsmodus die erste Elektronikeinheit (3) oder die zweite Elektronikeinheit (4) die Sensorelektrode (7) mit einem Ansteuersignal und die Guardelektrode (8) mit einem Guardsignal beaufschlagen.

10. Vorrichtung nach Anspruch 9,
wobei die Steuer-/Auswerte-/Ausgabeeinheit (2) ausgehend von einem an der Sensorelektrode (7) resultierenden abgreifbaren Signal und dem Ansteuersignal und/oder dem Guardsignal das Überschreiten und/oder das Unterschreiten des vorgegebenen Füllstands ermittelt.

11. Vorrichtung nach Anspruch 9 oder 10,
wobei die Steuer-/Auswerte-/Ausgabeeinheit (2) mindestens ein Amplitudenverhältnis aus dem Guardsignal und/oder dem Ansteuersignal und dem Stromsignal und/oder einem von dem Stromsignal abhängigen Spannungssignal ermittelt und anhand des Amplitudenverhältnisses das Überschreiten oder Unterschreiten des Füllstands des Mediums in dem Behälter ermittelt.

## Claims

1. Method for monitoring measured values of the electrical conductivity and/or of the dielectric constant of a medium in a vessel used in automation technology, with a measuring probe (1), wherein said measuring probe (1) is operated as a conductive measuring probe in a conductive operating mode and as a capacitance measuring probe in a capacitance operating mode,
wherein the conductive operating mode and the capacitance operating mode are controlled alternately, and wherein a predefined level of the medium located in the vessel is monitored using the determined electrical conductivity and/or the dielectric constant,
**characterized in that**
on the basis of the measured values which are determined in at least one of the two operating modes, a check is performed to determine whether the electrical conductivity and/or the dielectric constant is/are within a predefined tolerance range, wherein a message and/or a switch signal is/are generated if the electrical conductivity and/or the dielectric is/are outside the predefined tolerance range, wherein the measured values that are determined in the capacitance operating mode are taken for non-conductive media that are to be monitored or media with a low conductivity,
wherein the measured values that are determined in the conductive operating mode are taken for media with a high electrical conductivity that are to be monitored, and
wherein the measured values that are determined in the capacitance operating mode and the conductive operating mode are taken for media which are to be monitored and have a conductivity in a transition zone,
wherein a weighting factor is applied to the measured values of the conductive and capacitance operating modes.

2. Method as claimed in Claim 1,
wherein, in the transition zone, the measured values that are determined in the capacitance operating mode are compared against the measured values that are determined in the conductive operating mode, and wherein a plausibility check is performed on the basis of the comparison.

3. Method as claimed in one or more of the previous claims,
wherein the measuring probe (1) is assigned a switching function to monitor a predefined level of the medium in the vessel, wherein a switching operation for a pump is performed when a predefined level is reached.

4. Method as claimed in Claim 3,
wherein the measuring probe (1) is assigned at least one switching curve, which puts the measured values of the measuring probe or variables derived from the measured values of the measuring probe (1) in a functional relation to at least one of the medium-specific properties of the medium, and wherein, when a measured value of the measuring probe (1) that is predefined by the switching curve is reached, the overshooting and/or undershooting of a predefined level of medium in the vessel is signaled.

5. Method as claimed in Claim 4,
wherein the switching curve is adjusted by the operating personnel in such a way that a sensitivity of the measuring probe (1) to build-up is set in relation to the current application.

6. Apparatus designed to monitor the electrical conductivity and/or the dielectric constant of a medium in a vessel with a measuring probe (1), which is designed in such a way that it is operated as a conductive measuring probe in a conductive operating mode and as a capacitive measuring probe in a capacitance operating mode, with a control/evaluation/output unit (2), which is designed in such a way that it alternately controls the conductive operating mode and the capacitance operating mode and, using the determined electrical conductivity and/or dielectric constant, monitors a predefined level of the medium in the vessel,
**characterized in that**
the control/evaluation/output unit (2) is further designed to check, on the basis of the measured values which are determined in at least one of the two operating modes, whether the electrical conductivity and/or the dielectric constant is/are within a predefined tolerance range, wherein a message is generated if the electrical conductivity and/or the dielectric constant is/are outside the predefined tolerance range,
wherein the control/evaluation/output unit (2) is further designed to take the measured values that are determined in the capacitance operating mode for non-conductive media that are to be monitored or media with a low conductivity, to take the measured values that are determined in the conductive operating mode for media with a high electrical conductivity that are to be monitored, and to take the measured values that are determined in the capacitance operating mode and the conductive operating mode for media which are to be monitored and have a conductivity in a transition zone,
wherein a weighting factor is applied to the measured values of the conductive and capacitance operating modes.

7. Apparatus as claimed in Claim 6,
wherein the measuring probe (1) is assigned a memory unit (5) in which information is stored which puts the measured values of the measuring probe (1) or variables derived from the measured values of the measuring probe (1) in a functional relation to at least one medium-specific property of the medium,
wherein the switch points for the control/evaluation/output unit (2) are predefined via the functional relation.

8. Apparatus as claimed in Claim 6 or 7,
wherein the measuring probe (1) has a sensor electrode (7) and a guard electrode (8),
wherein a first electronic unit (3) is provided which is designed in such a way that it operates the measuring probe in the conductive operating mode
wherein a second electronic unit (4) is provided which is designed in such a way that it operates the measuring probe (1) in the capacitance operating mode, and
wherein a switching unit (6) is provided by means of which the control/evaluation/output unit (2) alternately activates the conductive operating mode and the capacitance operating mode of the measuring probe (1).

9. Apparatus as claimed in Claim 8,
wherein, depending on the desired operating mode, the first electronic unit (3) or the second electronic unit (4) supply the sensor electrode (7) with a control signal and the guard electrode (8) with a guard signal.

10. Apparatus as claimed in Claim 9,
wherein, on the basis of a resulting signal that can be measured at the sensor electrode (7) and the control signal and/or the guard signal, the control/evaluation/output unit (2) determines an undershooting or overshooting of the predefined level.

11. Apparatus as claimed in Claim 9 or 10,
wherein the control/evaluation/output unit (2) determines at least an amplitude ratio from the guard signal and/or the control signal and the current signal and/or a voltage signal that depends on the current signal and, on the basis of the amplitude ratio, determines an undershooting or overshooting of the level of the medium in the vessel.

## Revendications

1. Procédé destiné à la surveillance de valeurs mesurées de la conductivité électrique et/ou de la constante diélectrique d'un produit dans un réservoir de la technique d'automatisation, avec une sonde de mesure (1), laquelle sonde de mesure (1) est utilisée dans un mode de fonctionnement conductif en tant que sonde de mesure conductive et dans un mode de fonctionnement capacitif en tant que sonde de mesure capacitive,
le mode de fonctionnement conductif et le mode de fonctionnement capacitif étant commandés à tour de rôle, et un niveau prédéfini du produit se trouvant dans le réservoir étant surveillé en utilisant la conductivité électrique et/ou la constante diélectrique déterminée(s),
**caractérisé**
**en ce qu'**au moyen des valeurs mesurées, qui sont déterminées dans au moins l'un des deux modes de fonctionnement, on vérifie si la conductivité électrique et/ou la constante diélectrique se situe(nt) dans une bande de tolérance prédéfinie, un message et/ou un signal de commutation étant généré(s) lorsque la conductivité électrique et/ou la constante diélectrique se situe(nt) en dehors de la bande de tolérance prédéfinie,
procédé pour lequel, dans le cas de produits à surveiller qui sont non conducteurs ou de produits à surveiller présentant une faible conductivité, on prend les valeurs mesurées qui sont déterminées dans le mode de fonctionnement capacitif, procédé pour lequel, dans le cas de produits à surveiller présentant une conductivité élevée, on prend les valeurs mesurées qui sont déterminées dans le mode de fonctionnement conductif, et
procédé pour lequel, dans le cas de produits à surveiller présentant une conductivité située dans une zone de transition, on prend les valeurs mesurées qui sont déterminées dans le mode de fonctionnement capacitif et dans le mode de fonctionnement conductif,
les valeurs mesurées des modes de fonctionnement conductif et capacitif étant pourvues d'un facteur de pondération.

2. Procédé selon la revendication 1,
pour lequel, dans la zone de transition, les valeurs mesurées, qui sont déterminées dans le mode de fonctionnement capacitif, sont comparées avec les valeurs mesurées, qui sont déterminées dans le mode de fonctionnement conductif, et un contrôle de plausibilité étant effectué au moyen de la comparaison.

3. Procédé selon l'une ou plusieurs des revendications précédentes,
pour lequel est attribuée, à la sonde de mesure (1), une fonction de commutation destinée à la surveillance d'un niveau prédéfini du produit dans le réservoir, une commutation d'une pompe étant effectuée en cas d'atteinte du niveau prédéfinissable.

4. Procédé selon la revendication 3,
pour lequel est attribuée, à la sonde de mesure (1), une courbe de commutation, qui met les valeurs mesurées de la sonde de mesure ou des grandeurs dérivées des valeurs mesurées de la sonde de mesure (1) dans une relation fonctionnelle avec au moins l'une des propriétés spécifiques au produit et, en cas d'atteinte d'une valeur mesurée de la sonde de mesure (1), laquelle valeur est prédéfinie par la courbe de commutation, le dépassement par défaut et/ou le dépassement par excès d'un niveau prédéfini du produit dans le réservoir est/sont signalé(s).

5. Procédé selon la revendication 4,
pour lequel la courbe de commutation est adaptée par le personnel de service de telle sorte qu'une sensibilité au dépôt de la sonde de mesure (1) est réglée par rapport à l'application existante.

6. Dispositif destiné à la surveillance de la conductivité électrique et/ou de la constante diélectrique d'un produit dans un réservoir, avec une sonde de mesure (1), qui est conçue de telle manière à être utilisée, dans un mode de fonctionnement conductif, en tant que sonde de mesure conductive et, dans un mode de fonctionnement capacitif, en tant que sonde de mesure capacitive, avec une unité de commande / d'exploitation / d'affichage (2), qui est conçue de telle sorte à commander à tour de rôle le mode de fonctionnement conductif et le mode de fonctionnement capacitif et, en utilisant la conductivité électrique et/ou la constante diélectrique déterminée(s), à surveiller un niveau prédéfini du produit se trouvant dans le réservoir,
**caractérisé**
**en ce que** l'unité de commande / d'exploitation / d'affichage (2) est en outre conçue de telle sorte qu'au moyen des valeurs mesurées, qui sont déterminées dans au moins l'un des deux modes de fonctionnement, on vérifie si la conductivité électrique et/ou la constante diélectrique se situe(nt) dans une bande de tolérance prédéfinie, un message étant généré lorsque la conductivité électrique et/ou la constante diélectrique se situe(nt) en dehors de la bande de tolérance prédéfinie,
l'unité de commande / d'exploitation / d'affichage (2) étant en outre conçue de telle sorte, dans le cas de produits à surveiller qui sont non conducteurs ou de produits à surveiller présentant une faible conductivité, à prendre les valeurs mesurées qui sont déterminées dans le mode de fonctionnement capacitif,
dans le cas de produits à surveiller présentant une conductivité élevée, à prendre les valeurs mesurées qui sont déterminées dans le mode de fonctionnement conductif, et
dans le cas de produits à surveiller présentant une conductivité située dans une zone de transition, à prendre les valeurs mesurées qui sont déterminées dans le mode de fonctionnement capacitif et dans le mode de fonctionnement conductif, les valeurs mesurées des modes de fonctionnement conductif et capacitif étant pourvues d'un facteur de pondération.

7. Dispositif selon la revendication 6,
pour lequel est attribuée, à la sonde de mesure (1), une unité de mémoire (5), dans laquelle sont enregistrées des informations, qui mettent les valeurs mesurées de la sonde de mesure (1) ou des grandeurs dérivées des valeurs mesurées de la sonde de mesure (1) dans une relation fonctionnelle avec au moins l'une des propriétés spécifiques au produit, les points de commutation pour l'unité de commande / d'exploitation / d'affichage (2) étant prédéfinis par l'intermédiaire de la relation fonctionnelle.

8. Dispositif selon la revendication 6 ou 7,
pour lequel la sonde de mesure (1) comprend une électrode de capteur (7) et une électrode de garde (8),
une première unité électronique (3) étant prévue, laquelle est conçue de telle sorte à exploiter la sonde de mesure dans le mode de fonctionnement conductif une deuxième unité électronique (3) étant prévue, laquelle est conçue de telle sorte à exploiter la sonde de mesure dans le mode de fonctionnement capacitif, et
une unité de commutation (6) étant prévue, par l'intermédiaire de laquelle l'unité de commande / d'exploitation / d'affichage (2) active à tour de rôle le mode de fonctionnement conductif et le mode de fonctionnement capacitif de la sonde de mesure (1).

9. Dispositif selon la revendication 8,
pour lequel, selon le mode de fonctionnement commandé, la première unité électronique (3) ou la deuxième unité électronique (4) alimentent l'électrode de capteur (7) avec un signal de commande et l'électrode de garde (8) avec un signal de garde.

10. Dispositif selon la revendication 9,
pour lequel l'unité de commande / d'exploitation / d'affichage (2) détermine, à partir d'un signal pouvant être prélevé sur l'électrode de capteur (7) et du signal de commande et/ou du signal de garde, le dépassement par excès ou par défaut du niveau prédéfini.

11. Dispositif selon la revendication 9 ou 10,
pour lequel l'unité de commande / d'exploitation / d'affichage (2) détermine au moins un rapport d'amplitudes à partir du signal de garde et/ou du signal de commande et/ou du signal de courant et/ou d'un signal de tension dépendant du signal de courant, et détermine, au moyen du rapport d'amplitudes, le dépassement par excès ou par défaut du niveau de produit dans le réservoir.
